# EUROPÄISCHE PATENTANMELDUNG

(11) **EP 4 400 301 A1**
(43) Veröffentlichungstag der Anmeldung: **17.07.2024**
(21) Anmeldenummer: 24152245.7
(22) Anmeldetag: 16.01.2024
(51) Int. Cl.: B32B 3/04, B32B 7/12, B32B 17/06, B32B 21/08, B32B 21/14, B32B 27/30, B32B 27/36, B32B 27/38, B32B 27/42

(54) **AUSSENVERKLEIDUNG**

(30) Priorität: 16.01.2023 AT 500172023
(71) Anmelder: Reisinger, Stephan, 8962 Gröbming (AT); Reisinger, Erich, 8962 Gröbming (AT)
(72) Erfinder: Reisinger, Stephan, 8962 Gröbming (AT); Reisinger, Erich, 8962 Gröbming (AT)
(74) Vertreter: Schardmüller Gall-Schuhmann Patentanwälte OG

(57) **Zusammenfassung**

Die Erfindung betrifft ein Verfahren zur Herstellung einer Außenverkleidung (9) für Fenster, Türen oder Fassaden, wobei die Außenverkleidung (9) zumindest eine Glasschicht (1) und eine mit der Glasschicht (1) verbundene Materialschicht (3) aufweist und wobei das Verfahren zumindest die folgenden Schritte umfasst: Vorbehandeln der Materialschicht (3) oder mehrerer Materialstücke durch Entziehen von Restfeuchte; gegebenenfalls Fügen mehrerer Materialstücke, um die Materialschicht (3) herzustellen; Herstellen eines Verbunds durch Auflegen der Materialschicht (3) auf die Glasschicht (1) unter Zwischenlage einer Folie (2), insbesondere einer Kunststofffolie, vorzugsweise einer Schmelzfolie, beispielsweise einer EVA-Folie, wobei die Folie vorzugsweise UV- und/oder witterungsbeständig ausgebildet ist; Verpressen des Verbunds unter Wärmezufuhr.

## Beschreibung

Die vorliegende Erfindung betrifft ein Verfahren zur Herstellung einer Außenverkleidung für Fenster, Türen oder Fassaden, wobei die Außenverkleidung zumindest eine Glasschicht und eine mit der Glasschicht verbundene Materialschicht aufweist.

Weiters betrifft die Erfindung eine Außenverkleidung, welche durch das erfindungsgemäße Verfahren erhältlich ist, sowie ein Fenster, eine Tür oder eine Fassade umfassend die erfindungsgemäße Außenverkleidung.

### Stand der Technik

Aus dem Stand der Technik sind Verbundwerkstoffe bekannt, welche Verbundwerkstoffe aus einer Glasplatte und einer mit der Glasschicht verklebten Holzfurnierschicht bestehen. Zur Herstellung solcher Verbundwerkstoffe werden Holzfurnierschicht und Glasplatte unter Zwischenlage einer speziellen Schmelzklebefolie unter Wärmeeinwirkung verpresst. Solche Verbundwerkstoffe eignen sich als Wandverkleidungsflächen oder Möbelflächen im Innenbereich, etwa für Bartheken oder Tischplatten (DE9204379U1).

Für den Außenbereich sind solche Verbundwerkstoffe hingegen nicht geeignet, da eine Erwärmung auf hohe Temperaturen, wie sie zur optimalen Verarbeitung von Schmelzfolien notwendig wären, zu Rissen und Verwerfungen im Holzfurnier führen würde; im Falle zu niedriger Temperaturen kann jedoch die erforderliche Witterungsbeständigkeit nicht gewährleistet werden, da die Verbindung zwischen den einzelnen Schichten des Verbundwerkstoffes nicht stark genug ist, um den im Außenbereich vorherrschenden Witterungsverhältnissen dauerhaft standhalten zu können.

### Darstellung der Erfindung

Die vorliegende Erfindung hat sich daher die Aufgabe gestellt, eine Außenverkleidung bereitzustellen, welche Außenverkleidung einerseits den Schutz der Sichtfläche einer beliebigen Dekor- oder Materialschicht gewährleistet, dabei aber andererseits auch die für den Außenbereich erforderliche Witterungsbeständigkeit aufweist. Weitere Aufgaben der Erfindung ergeben sich aus der Beschreibung.

Eine Aufgabe der Erfindung wird gelöst durch ein Verfahren gemäß Anspruch 1; weitere Aufgaben werden durch die abhängigen und nebengeordneten Ansprüche gelöst.

Bei einem Verfahren zur Herstellung einer Außenverkleidung für Fenster, Türen oder Fassaden, welche Außenverkleidung zumindest eine Glasschicht und eine mit der Glasschicht verbundene Materialschicht, etwa eine Holz- oder Furnierschicht, aufweist, wird eine Aufgabe der Erfindung gelöst, indem die folgenden Schritte ausgeführt werden:
a. Vorbehandeln der Materialschicht oder mehrerer Materialstücke durch Entziehen von Restfeuchte;
b. gegebenenfalls Fügen mehrerer Materialstücke, um die Materialschicht herzustellen;
c. Herstellen eines Verbunds durch Auflegen der Materialschicht auf die Glasschicht unter Zwischenlage einer Folie;
d. Verpressen des Verbunds unter Wärmezufuhr;
e. Aufbringen einer Schutzschicht auf eine von der Glasschicht abgewandte Rückseite der Materialschicht, um insbesondere die Rückseite der Materialschicht vor der Aufnahme von Feuchtigkeit zu schützen, wobei die Schutzschicht die Materialschicht nicht nur rückseitig sondern auch seitlich umgibt, sodass die Materialschicht zwischen Glasschicht und Schutzschicht eingeschlossen ist; und/oder Aufbringen einer Träger- oder Gegenzugplatte unter Zwischenlage einer weiteren Folie auf die von der Glasschicht abgewandte Rückseite der Materialschicht, sodass die Materialschicht von der ersten Folie und der weiteren Folie eingekapselt ist.

Die Schritte a, c und d sind dabei obligatorisch; Schritt b muss nur dann ausgeführt werden, wenn die Materialschicht aus mehreren Materialstücken besteht, welche Materialstücke gesondert vorbehandelt werden müssen, bevor sie zu einer einzigen die Materialschicht ausbildenden Schicht verbunden werden. Das erfindungsgemäße Verfahren unterscheidet sich vom Stand der Technik insbesondere durch Schritt a, also durch die Reduktion der Restfeuchte der Materialschicht (oder der einzelnen Materialstücke). Dadurch wird das Risiko, dass es im Zuge von Schritt d, also beim Verpressen unter Wärmezufuhr, zu Schwindungen im (beispielsweise vernähten oder vorzugsweise verleimten) Stoßbereich der Materialstücke und/oder zu Rissen in der Materialschicht kommt, deutlich verringert. Insbesondere ermöglich diese Vorbehandlung die Verwendung von Schmelzfolien zur (mittelbaren oder unmittelbaren) Verbindung von Materialschicht und Glasschicht sowie deren Erwärmung auf die zur optimalen Verarbeitung solcher Schmelzfolien erforderlichen hohen Temperaturen. Insgesamt ermöglicht das erfindungsgemäße Verfahren also die Herstellung von Verbundwerkstoffen, die auch als (optisch ansprechende) Verkleidung im Außenbereich, etwa bei Fenstern, Türen oder Fassaden, eingesetzt werden können und dauerhaft witterungsbeständig sind. Insbesondere dann, wenn die Materialschicht durch eine Holz- oder Furnierschicht ausgebildet ist oder eine solche umfasst, kann vorzugsweise eine Schutzschicht auf eine von der Glasschicht abgewandte Rückseite der Materialschicht aufgebracht werden, um insbesondere die Rückseite der Materialschicht vor der Aufnahme von Feuchtigkeit zu schützen, wenn die Außenverkleidung bestimmungsgemäß zur Verkleidung von Türen, Fenstern, Fassaden oder ähnlichem verwendet wird. Die Schutzschicht kann dabei beispielsweise durch eine Lackschicht, eine Epoxidharzschicht und/oder durch eine wasserdichte Folie ausgebildet sein. Vorzugsweise kann bei Verwendung einer Schutzschicht die Materialschicht in ihren Längen- und Breitenabmessungen etwas kleiner (beispielsweise jeweils etwa 1 mm kleiner) bemessen sein als die Glasschicht, um auch den Kantenbereich der Materialschicht vor Eindringen von Feuchtigkeit zu schützen. Im Allgemeinen kann die Glasschicht beispielsweise auch Polymethylmethacrylat (Plexiglas), Acrylglas oder Polycarbonate enthalten oder aus diesen bestehen. Insbesondere bei Verwendung dieser Materialien (Plexi- Acrylglas und Polycarbonate) eignet sich auch Polyvinylacetat-Leim (oder einfach: Weißleim) anstelle der (Schmelz-) Folie. Um den bestmöglichen Verbund zu erhalten, ist es bevorzugt, diese Materialien vorher anzuschleifen/aufzurauen. Hierbei ist eine Verpress-Temperatur von nur etwa 60° C notwendig.

Grundsätzlich kann durch die Schutzschicht und/oder durch die weitere Folie ein dauerhafter Schutz der Materialschicht erreicht werden. Insbesondere dadurch, dass auch der Kantenbereich (also nicht nur die durch die Glasschicht sichtbare Front- oder Dekorseite und die Rückseite, sondern auch die - bei Holz in der Regel als Kantenflächen und Hirnholzenden bezeichneten - Seitenflächen) der Materialschicht von der Schutzschicht und/der der weiteren Folie vor Feuchtigkeitseintritt geschützt ist, ist die erfindungsgemäße Außenverkleidung besonders gut für den Einsatz im Außenbereich geeignet. Anstelle der weiteren Folie kann auch eine Schicht aus (wasserfestem) Leim, insbesondere Weißleim, verwendet werden, um die Materialschicht mit der Träger- oder Gegenzugplatte zu verbinden und die Materialschicht einzukapseln.

Gemäß einer bevorzugten Ausführungsform des erfindungsgemäßen Verfahrens umfasst das Vorbehandeln gemäß Schritt a ein Pressen der Materialschicht und/oder der Materialstücke, vorzugsweise mittels einer Verleimpresse (Furnier-Verleim-Presse).

Dadurch kann eine Reduktion der Restfeuchte erfolgen, ohne dass es zu Verwerfungen in der Materialschicht bzw. den einzelnen Materialstücken kommt.

Gemäß einer weiteren bevorzugten Ausführungsform des erfindungsgemäßen Verfahrens wird die Materialschicht und/oder die Materialstücke im Zuge des Vorbehandelns gemäß Schritt a einer Trocknungstemperatur von mehr als etwa 100°C, vorzugsweise zwischen etwa 115°C und etwa 145°C, besonders bevorzugt von etwa 130°C, ausgesetzt.

Die Vorbehandlung bei dieser Trocknungstemperatur ermöglicht eine Reduzierung der Restfeuchte auf besonders effiziente sowie zeit- und energiesparende Weise.

Gemäß einer weiteren bevorzugten Ausführungsform des erfindungsgemäßen Verfahrens wird die Trocknungstemperatur für zumindest 30 Minuten, vorzugsweise etwa 1 Stunde, gehalten.

Diese Vorbehandlung hat sich als optimal herausgestellt, um die Materialschicht bestmöglich für die nachfolgende Verarbeitung, insbesondere für das Verpressen unter Wärmezufuhr gemäß Schritt d, vorzubereiten. Eine dementsprechend vorbereitete Materialschicht, insbesondere Holz- oder Furnierschicht, kann nämlich problemlos Temperaturen jenseits der 100 °C ausgesetzt werden, ohne dabei beschädigt zu werden, Risse oder Verwerfungen auszubilden, zu schwinden oder sich zu verziehen.

Gemäß einer weiteren bevorzugten Ausführungsform des erfindungsgemäßen Verfahrens wird die Restfeuchte der Materialschicht oder der Materialstücke im Zuge des Vorbehandelns gemäß Schritt a auf weniger als etwa 8%, vorzugsweise weniger als etwa 5%, besonders bevorzugt weniger als etwa 4%, reduziert.

Bei diesem Restfeuchtegehalt ist das Risiko von Schwindungen und/oder Rissen in der Materialschicht während des Verpressens unter Wärmezufuhr gemäß Schritt d in einem ausreichenden Maße reduziert, selbst dann, wenn die Materialschicht dabei den zur Verarbeitung von Schmelzfolien notwendigen hohen Temperaturen (von jenseits der 100 °C) ausgesetzt wird.

Gemäß einer weiteren bevorzugten Ausführungsform des erfindungsgemäßen Verfahrens umfasst das Fügen gemäß Schritt b ein Bearbeiten von Kanten der Materialstücke und/oder ein Verkleben und/oder ein Vernähen der Materialstücke. Insbesondere können die Materialstücke in Schritt b in ihren Stoßbereichen vernäht werden. Darüber hinaus kann dieser Schritt auch ein entsprechendes Abstimmen der Konturen der Stoßbereiche der einzelnen Materialstücke aufeinander enthalten.

Gemäß einer weiteren bevorzugten Ausführungsform des erfindungsgemäßen Verfahrens wird eine Außenseite der Glasschicht und/oder der Materialschicht, vorzugsweise mit Alkohol, gereinigt, bevor diese Außenseite im Zuge des Herstellens des Verbunds gemäß Schritt c in Kontakt mit der Folie gebracht wird.

Es hat sich gezeigt, dass sich durch diese Maßnahme die Witterungsbeständigkeit der erfindungsgemäßen Außenverkleidung erhöhen und sich die Dauer, für die die erfindungsgemäße Außenverkleidung diesen Schutz gegen Witterungseinflüsse gewährleistet, verlängern lässt. Insbesondere bei Verwendung einer Schmelzfolie erhöht die Reinigung der Außenseite die Adhäsion zwischen der Schmelzfolie und der Glasschicht und/oder der Materialschicht, beispielsweise einer Furnier- oder Holzschicht.

Gemäß einer weiteren bevorzugten Ausführungsform des erfindungsgemäßen Verfahrens ist die Materialschicht und/oder die Folie in ihrer Größe passgenau auf die Glasschicht abgestimmt. Insbesondere kann die Folie dieselben Abmessungen in Länge und Breite wie die Glasschicht bzw. die Materialschicht aufweisen; die Stärke der Folie ist typischerweise deutlich geringer als die Stärke der Glasschicht bzw. der Materialschicht.

Diese Ausführungsform zeichnet sich durch eine besondere Langlebigkeit der durch das Verfahren erhältlichen Außenverkleidung aus, die auf eine vollflächige und damit stärkere Verbindung zwischen Folie, insbesondere Schmelzfolie, einerseits und Glas- bzw. Materialschicht andererseits zurückzuführen ist. Auch die Witterungsbeständigkeit der Außenverkleidung lässt sich dadurch, im Vergleich zu Ausführungsvarianten, bei denen die Folie die Material- bzw. die Glasschicht nur teilweise bedeckt, deutlich verbessern.

Gemäß einer weiteren bevorzugten Ausführungsform des erfindungsgemäßen Verfahrens handelt es sich bei der Folie um eine Kunststofffolie, insbesondere eine Schmelzfolie (Schmelzklebefilm, Schmelzklebefolie), beispielsweise eine EVA-Folie.

Insbesondere werden bei der Herstellung der erfindungsgemäßen Außenverkleidung aus Ethylen und Vinylacetat hergestellte Copolymere (Ethylen-Vinylacetat-Copolymere, EVAC oder EVA) als Schmelzklebstoff in Form von Folien eingesetzt. Die Verwendung entsprechender Folien aus Schmelzklebstoffen ermöglicht eine besonders einfache und kostengünstige Herstellung der erfindungsgemäßen Außenverkleidung, da die Folie zur Verbindung der Materialschicht mit der Glasschicht lediglich zwischen diesen Schichten positioniert und aufgeschmolzen werden muss und nach dem Abkühlen ein dauerhafter Verbund vorliegt. Die der Glasschicht zugewandte Sichtfläche der Materialschicht wird auf besonders zuverlässige Weise vor äußeren Einflüssen, insbesondere vor Witterungseinflüssen, geschützt; gleichzeitig zeichnet sich die Außenverkleidung aber durch eine außerordentlich geringe Dicke aus, zumal die Stärke der Folie üblicherweise im Bereich von 10-200 µm liegt. Zudem ist ein Quellen der - gemäß Schritt a vorbehandelten - Furnier- oder Holzschicht durch die Verschmelzung nicht mehr möglich.

Gemäß einer weiteren bevorzugten Ausführungsform des erfindungsgemäßen Verfahrens ist die Folie UV- und witterungsbeständig ausgebildet.

Dies ermöglicht einen noch dauerhafteren Schutz der Materialschicht bzw. deren Sichtfläche. Insbesondere kann die optische Erscheinungsform der Sichtfläche vor ungewollten Veränderungen durch dauerhafte Sonneneinstrahlung, welcher Sonneneinstrahlung die Außenverkleidung naturgemäß oftmals ausgesetzt ist, geschützt werden.

Gemäß einer weiteren bevorzugten Ausführungsform des erfindungsgemäßen Verfahrens wird die Materialschicht, insbesondere die Kanten der Materialschicht, bearbeitet, insbesondere geschliffen, bevor die Materialschicht im Zuge des Herstellens des Verbunds gemäß Schritt c in Kontakt mit der Folie gebracht wird.

Da somit kein nachträgliches Bearbeiten des Verbunds nach dem Verpressen unter Wärmezufuhr, also nach Schritt d, mehr erforderlich ist, können dadurch entstehende Beschädigungen der Außenverkleidung gänzlich vermieden werden. Insbesondere können die Kanten der Materialschicht geschliffen und/oder poliert und/oder beschichtet und/oder in anderer Weise bearbeitet werden. Außerdem kann die Sichtfläche der Materialfläche geschliffen und/oder poliert und/oder beschichtet und/oder in anderer Weise bearbeitet werden, um dieser die gewünschte Beschaffenheit bzw. Optik zu verleihen, bevor die Materialschicht mittels der (Schmelzklebe-)Folie mit der Glasschicht verbunden wird.

Gemäß einer weiteren bevorzugten Ausführungsform des erfindungsgemäßen Verfahrens wird der Verbund an seinen Kanten abgeklebt, um ein Herausquellen der Folie im Zuge des Verpressens gemäß Schritt d. zu verhindern. Dafür kann beispielsweise ein Klebeband bzw. eine Gewebeband, insbesondere Green Tape, verwendet werden.

Dadurch werden Glasschicht und Materialschicht - und somit auch die Folie - in ihren Relativpositionen zueinander fixiert. Ein nachträgliches Entfernen von überstehenden Folienresten, die durch das Verpressen des Verbunds über die Kanten der Materialschicht und der Glasschicht hinausragen, kann dadurch ebenfalls entfallen. Dies vereinfacht die Herstellung der Außenverkleidung noch weiter und ermöglicht - durch die Einsparung dieses Arbeitsschrittes - eine noch kostengünstigere Fertigung. Sollte es dennoch vorkommen, dass Teile der Schmelzklebefolie durch das Verpressen unter Wärmezufuhr gemäß Schritt d über die Kanten der Materialschicht und der Glasschicht hervor quillen bzw. über die Kanten hinausragen, so können diese überstehenden Ränder auf einfache Weise, etwas mittels eines Schneidwerkzeugs, beispielsweise eines Messers, entfernt werden.

Gemäß einer weiteren bevorzugten Ausführungsform des erfindungsgemäßen Verfahrens erfolgt das Verpressen gemäß Schritt d mittels eines Vakuumsacks, in welchen Vakuumsack der Verbund eingelegt wird.

Nach dem Einlegen des Verbunds kann der Vakuumsack luftdicht verschlossen und bestimmungsgemäß mit einer Vakuumpumpe verbunden werden. Nach Aktivierung der Vakuumpumpe wird der Verbund einer homogenen Flächenpressung ausgesetzt. Dadurch kann die Blasenbildung auf zuverlässige Weise vermieden werden, was die Witterungsbeständigkeit des Verfahrensendproduktes (der Außenverkleidung) noch weiter erhöht. Im Vakuumsack wird der Verbund aus Glas, Folie und Furnier durch den Vakuumsack gleichmäßig verpresst, was zu einer homogenen Druckverteilung und somit zu einer noch beständigeren Verbindung zwischen Folie und Material- sowie Glasschicht führt.

Gemäß einer weiteren bevorzugten Ausführungsform des erfindungsgemäßen Verfahrens steht der Verbund während des Verpressens gemäß Schritt d mit einer Aufheizbremse in Wirkverbindung, um die mit der Wärmezufuhr einhergehende Erwärmung der Materialschicht gegenüber der mit der Wärmezufuhr einhergehenden Erwärmung der Glasschicht zeitlich zu verzögern. Vorzugsweise ist die Aufheizbremse durch eine MDF-Platte und eine auf der MDF-Platte positionierte Spanplatte ausgebildet, wobei vorzugsweise eine Stärke der MDF-Platte etwa 10-15 mm, insbesondere etwa 12 mm, und/oder eine Stärke der Spanplatte etwa 20-25 mm, insbesondere etwa 22 mm, beträgt. Insbesondere kann die Aufheizbremse so dimensioniert sein, dass der Verbund, insbesondere die Materialschicht des Verbunds, vollflächig auf oder an der Aufheizbremse positioniert werden kann.

Durch die Aufheizbremse wird der Verbund während des Verpressens formstabil gehalten, was das Ergebnis des Pressvorgangs verbessert. Somit führt diese Maßnahme zu einer verbesserten Witterungsbeständigkeit und zu einer verbesserten Anhaftung der einzelnen Komponenten des Verbunds aneinander.

Gemäß einer weiteren bevorzugten Ausführungsform des erfindungsgemäßen Verfahrens wird die Aufheizbremse (vor Schritt d) derart in oder an dem Vakuumsack positioniert, dass die Materialschicht des Verbunds während des Verpressens gemäß Schritt d auf oder an der Aufheizbremse, vorzugsweise auf oder an der Spanplatte der Aufheizbremse, zu liegen kommt.

Die Aufheizbremse und deren Positionierung bewirkt eine (bzw. verstärkt die materialbedingte) zeitverzögerte Erwärmung des Verbunds während des Verpressens unter Wärmezufuhr gemäß Schritt d. Insbesondere geht der Temperaturanstieg in der Materialschicht, etwa der Furnier- oder Holzschicht, dadurch deutlich langsamer vonstatten als der Temperaturanstieg in der Glasschicht. Dadurch kann ein Aufkochen der (Schmelz-)Folie trotz entsprechend hoher Temperaturen verhindert werden.

Im Allgemeinen kann die Aufheizbremse beispielsweise in Inneren des Vakuumsacks positioniert werden, also in diesen eingelegt werden, sodass die Materialschicht des Verbunds (direkt) auf die Aufheizbremse aufgelegt werden kann; die Materialschicht also in (direktem) Kontakt mit der Aufheizbremse steht. Alternativ ist es aber auch möglich, die Aufheizbremse derart an dem Vakuumsack, etwa an dessen Unterseite, zu positionieren, dass die Materialschicht, nachdem der Verbund in den Vakuumsack eingelegt wurde, zwar an der Aufheizbremse anliegt, die Materialschicht dabei jedoch durch den Vakuumsack von der Aufheizbremse beabstandet ist. In beiden Fällen erfüllt die Aufheizbremse ihre Funktion, nämlich die Verzögerung der Erwärmung der Materialschicht gegenüber jener der Glasschicht.

Gemäß einer weiteren bevorzugten Ausführungsform des erfindungsgemäßen Verfahrens wird der Verbund im Zuge des Verpressens gemäß Schritt d einer Presstemperatur von mehr als 100 °C, vorzugsweise zwischen etwa 110 °C und etwa 150 °C, besonders bevorzugt von etwa 135 °C, ausgesetzt.

Diese Wahl der Presstemperatur führt dazu, dass sich die Schmelzfolie besonders gut mit der Glasschicht und der Materialschicht verbinden kann, was die Beständigkeit der Außenverkleidung weiter erhöht. Insbesondere ermöglicht eine Presstemperatur von 135 °C ein vollständiges Aufschmelzen der Folie, insbesondere der EVA-Folie, und somit eine nahtlose und dauerhafte Verbindung mit der Glasschicht sowie mit der Materialschicht, insbesondere wenn diese aus Furnier oder (Voll-)Holz gefertigt ist.

Gemäß einer weiteren bevorzugten Ausführungsform des erfindungsgemäßen Verfahrens erfolgt die Wärmezufuhr im Zuge des Verpressens gemäß Schritt d derart, dass ein resultierendes Presstemperaturprofil eine Aufheizphase, in welcher Aufheizphase eine graduelle Temperaturerhöhung bis zum Erreichen der Presstemperatur erfolgt, eine Haltephase, in welcher Haltephase die Presstemperatur gehalten wird, und eine Abkühlphase aufweist, wobei vorzugsweise die Aufheizphase 30-50 Minuten, insbesondere etwa 40 Minuten, die Haltephase 40-60 Minuten, insbesondere etwa 50 Minuten, und/oder die Abkühlphase 20-40 Minuten, insbesondere etwa 30 Minuten, andauert.

Anhand aufwändiger und umfangreicher Versuchsreihen hat sich herausgestellt, dass es zu einer deutlichen Erhöhung der Zeit- und Witterungsbeständigkeit der Außenverkleidung bzw. zu einer deutlich verbesserten Anhaftung der einzelnen Komponenten der Außenverkleidung führt, wenn der (anfangs noch lose) Verbund aus Glasschicht, Folie und Materialschicht, während er gemäß Schritt d verpresst wird, einem Presstemperaturprofil gemäß dieser bevorzugten Ausführungsform ausgesetzt wird. Insbesondere hat es sich als vorteilhaft herausgestellt, wenn der Verbund in kleinen Schritten über einen Zeitraum von 40 Minuten (von Raumtemperatur) auf 135 °C aufgeheizt wird, diese Temperatur für 50 Minuten gehalten wird und der Verbund anschließend über einen Zeitraum von 30 Minuten langsam abkühlen kann. Eine gemäß diesem Verfahren hergestellte Außenverkleidung zeichnet sich durch eine besonders gute Witterungsbeständigkeit und Langlebigkeit aus.

Gemäß einer weiteren bevorzugten Ausführungsform des erfindungsgemäßen Verfahrens erfolgt das Verpressen gemäß Schritt d in einem Ofen, vorzugsweise in einem Laminierofen, wobei vorzugsweise der Vakuumsack mit dem darin befindlichen Verbund in den Laminierofen eingelegt ist.

Es hat sich herausgestellt, dass die in einem Laminierofen vorherrschenden Bedingungen optimal für die Herstellung der erfindungsgemäßen Außenverkleidung sind. Außerdem kann das oben beschriebene Presstemperaturprofil in einem Laminierofen besonders energiesparend umgesetzt werden. Insbesondere können mehrere Außenverkleidungen gleichzeitig in einem Laminierofen verarbeitet (also unter Wärmezufuhr verpresst) werden, wobei jeder einzelne Verbund vorzugsweise in einem eigenen Vakuumsack positioniert ist. Alternativ können auch mehrere Verbunde in einem Vakuumsack positioniert werden.

Gemäß einer weiteren bevorzugten Ausführungsform des erfindungsgemäßen Verfahrens ist die Materialschicht durch eine Holz- oder Furnierschicht und/oder die Glasschicht durch eine Glasplatte, insbesondere durch eine Flachglasscheibe, ausgebildet.

Die gemäß dieser bevorzugten Ausführungsform des erfindungsgemäßen Verfahrens hergestellte Außenverkleidung vereint mehrere Vorteile in sich: zum einen kann die Holz- oder Furnierschicht so gewählt werden, dass die Außenverkleidung eine optisch ansprechende Sichtfläche aufweist, die bestens zur Sichtverkleidung von Türen und Fenstern sowie von Fassaden geeignet ist; zum anderen bietet die, vorzugsweise nur einige Millimeter dick ausgeführte, Flachglasscheibe (beispielsweise aus Float- oder Einscheibensicherheitsglas) einen hinreichenden Schutz der Holz- oder Furnierschicht gegen Witterungseinflüsse und andere äußere Einflüsse, beispielsweise Beschädigung durch äußere Krafteinwirkung. Insbesondere unter Verwendung einer Schmelzklebefolie aus EVA ermöglicht diese Materialwahl die Herstellung einer Außenverkleidung, welche Außenverkleidung sich durch eine besonders hohe Widerstandskraft gegen Witterungseinflüsse sowie eine besondere Langlebigkeit auszeichnet und daher besonders gut für den Außeneinsatz geeignet ist; dabei führt das erfindungsgemäße Verfahren dazu, dass die Holz- oder Furnierschicht keinerlei Risse, Verwerfungen oder sonstige Beschädigungen erleidet, wenn der Verbund im Zuge der Herstellung der Außenverkleidung hohen Temperaturen ausgesetzt wird, welche Temperaturen zur bestmöglichen Verarbeitung solcher Schmelzklebefolien benötigt werden. Ebenso wird ein Aufkochen der Folie während des Verpressens unter Wärmezufuhr auf zuverlässige Weise unterbunden.

Gemäß einer weiteren bevorzugten Ausführungsform des erfindungsgemäßen Verfahrens wird eine Träger- oder Gegenzugplatte, vorzugsweise unter Zwischenlage einer weiteren Folie, auf die von der Glasschicht abgewandte Rückseite der Materialschicht aufgebracht, wobei die Träger- oder Gegenzugplatte vorzugsweise als Melaminharzplatte oder durch ein Gegenzugpapier ausgebildet ist und insbesondere eine Stärke von mindestens 0,2 mm, besonders bevorzugt von 0,8 mm, aufweist. Dabei kann das Aufbringen der Träger- oder Gegenzugplatte vor Schritt d erfolgen, um den gesamten Verbund aus Glasschicht, (erster) Folie, Materialschicht, weiterer Folie und Träger- oder Gegenzugplatte in Schritt d gemeinsam zu verpressen. Es ist aber auch denkbar, dass zuerst der Verbund aus Glasschicht, (erster) Folie und Materialschicht verpresst wird und die Träger- oder Gegenzugplatte anschließend, beispielsweise mittels eines weiteren Verpressens unter Wärmezufuhr, mit Hilfe der weiteren Folie mit der Materialschicht verbunden wird. Alternativ kann die Träger- oder Gegenzugplatte beispielsweise vorab mit der Materialschicht, insbesondere mit der Furnier- oder Holzschicht, verbunden, vorzugsweise in einer Presse wasserfest verleimt, sein; in diesem Fall kann die weitere Folie, insbesondere die weitere Schmelzklebefolie, entfallen. Die Trägerplatte kann auch aus einem anderen wasserfesten Material bestehen oder ein solches enthalten, etwa ein dem Prozess der Holzacetylierung unterworfenes Holz, insbesondere MDF-Platten aus TRICOYA^{®}. Eine solche Trägerplatte würde Vorteile in Bezug auf unsichtbare Befestigungsmöglichkeiten der Außenverkleidung an Türen, Fenstern, Fassaden oder ähnlichem eröffnen. Derartige Trägerplatten könnten insbesondere in den Stärken 4, 6, 9, 12, 15 oder 18 mm verwendet werden.

Dadurch kann der durch das Verfahren erhältlichen Außenverkleidung ein noch besserer Schutz gegen Witterungseinflüsse verliehen werden. Dies kann insbesondere dann vorteilhaft sein, wenn als Materialschicht Holz oder Furnier zum Einsatz kommt. Vorzugsweise kann bei Verwendung einer weiteren Folie und/oder einer Träger- oder Gegenzugplatte die Materialschicht in ihren Längen- und Breitenabmessungen etwas kleiner (beispielsweise jeweils etwa 1 mm kleiner) bemessen sein als die Glasschicht und/oder die Träger- oder Gegenzugplatte, um auch den Kantenbereich der Materialschicht vor Eindringen von Feuchtigkeit zu schützen. Für eine Verwendung der Außenverkleidung im Innenbereich kann eine Lackschicht auf der Rückseite der Materialschicht ausreichen, für eine Verwendung der Außenverkleidung im Außenbereich ist es bevorzugt, die Materialschicht durch einen wasserfesten Gegenzug (auf der Rückseite der Materialschicht) und im (seitlichen) Kantenbereich durch eine Folie, insbesondere durch die erste und/oder die weitere Folie, beispielsweise die im Zuge des Verpressens austretende Schmelz-Folie zu schützen.

Gemäß einer weiteren bevorzugten Ausführungsform des erfindungsgemäßen Verfahrens wird in Schritt c entweder zwischen Materialschicht und Folie, oder zwischen Folie und Glasschicht eine PV-Funktionsschicht angeordnet, welche PV-Funktionsschicht zumindest eine Solarzellen-Schicht umfasst. Insbesondere kann die PV-Funktionsschicht transparent ausgebildet sein, sodass die aus Sicht eines Betrachters hinter der PV-Funktionsschicht liegende Sichtfläche der Materialschicht weiterhin sichtbar bleibt, gleichzeitig aber eine Energiegewinnung möglich ist.

Da Fenster, Türen und Fassaden im Außenbereich oftmals einer erheblichen Sonneneinstrahlung ausgesetzt sind, ermöglicht die Ausstattung der erfindungsgemäßen Außenverkleidung mit einer Photovoltaik-Funktionsschicht - also mit einer Solarzellen aufweisenden Schicht, mit deren Hilfe Sonnenlicht in elektrische Energie umgewandelt werden kann -, die Nutzung einer ansonsten ungenutzten Möglichkeit zur Energieerzeugung. Aufgrund der Einbettung der PV-Funktionsschicht in die erfindungsgemäße Außenverkleidung kann diese als eigenständiges Solarmodul verwendet werden; somit erfüllt die Außenverkleidung eine Doppelfunktion, nämlich optisch ansprechender Schutz vor Witterungseinflüssen einerseits und Energiegewinnung andererseits.

Eine Aufgabe der Erfindung wird auch durch eine Außenverkleidung für Fenster, Türen oder Fassaden gelöst, welche Außenverkleidung durch das Verfahren nach einem der Ansprüche 1 bis 18 erhältlich ist.

Durch das oben beschriebene Herstellungsverfahren unterscheidet sich die erfindungsgemäße Außenverkleidung strukturell von bekannten (Außen-) Verkleidungselementen. Insbesondere ermöglicht die Vorbehandlung der Materialschicht durch Restfeuchteentzug gemäß Schritt a die Anwendung hoher Presstemperaturen von jenseits der 100 °C beim Verpressen des Verbunds gemäß Schritt d, ohne dass dabei Schäden in der Materialschicht auftreten können. Gleichzeitig führt die Verwendung derart hoher Presstemperaturen dazu, dass sich die Eindringtiefe der Schmelzfolie bzw. deren (geschmolzener) Bestandteile in die Materialschicht gegenüber Verfahren mit niedrigeren Presstemperaturen deutlich erhöht; dies führt zu einer dauerhaften Versiegelung der Sichtfläche der Materialschicht und verbessert deren Schutz gegen Witterungseinflüsse erheblich - sowohl in qualitativer als auch in zeitlicher Hinsicht. Schließlich führen die - nun möglichen - hohen Presstemperaturen auch zu einer stärkeren Anhaftung der Schmelzfolie bzw. deren (geschmolzener) Bestandteile an der Glasschicht, was die Langlebigkeit der Außenverkleidung ebenfalls deutlich erhöht. Diese strukturellen Merkmale sind bei den eingangs beschriebenen Außenverkleidungen, bei denen Presstemperaturen von 100 °C nicht erreicht werden, nicht vorhanden. Darüber hinaus treffen sämtliche der oben, in Zusammenhang mit dem erfindungsgemäßen Verfahren und seinen bevorzugten Ausführungsformen beschriebenen Vorteile sinngemäß auch auf die erfindungsgemäße Außenverkleidung zu.

Ein weiterer Aspekt der vorliegenden Erfindung bezieht sich auf ein Fenster, eine Tür oder einer Fassade umfassend die erfindungsgemäße Außenverkleidung.

Dabei kann zur Befestigung der Außenverkleidung an dem Fenster, der Tür oder der Fassade ein elastisches, doppelseitig klebendes Fixierband und/oder ein Fassadenkleber verwendet werden. Alternativ sind auch andere form- oder kraftschlüssige Verbindungen zur Befestigung der Außenverkleidung an dem Fenster, derTür, der Fassade oder ähnlichem denkbar, etwa eine Verschraubung. Wiederum treffen sämtliche der oben, in Zusammenhang mit dem erfindungsgemäßen Verfahren und seinen bevorzugten Ausführungsformen sowie der erfindungsgemäßen Außenverkleidung beschriebenen Vorteile sinngemäß auch auf erfindungsgemäße Fenster, Türen und Fassaden zu. Weitere Anwendungsfälle der erfindungsgemäßen Außenverkleidung im Außenbereich sind, neben Fenstern, Türen und Fassaden, insbesondere auch Böden, Attikaverkleidungen. Grundsätzlich sind aber auch Anwendungen im Innenbereich denkbar, nämlich insbesondere zur Verkleidung von Stiegen und Böden (dabei müsste die Glasschicht rutschhemmend ausgeführt sein), Möbeln, oder auch Funktionseinrichtungen, etwa Krankenhaus- und Laboreinrichtungen. Ebenso könnte die Außenverkleidung bei Sportstättenbelägen im Innen- und Außenbereich zur Anwendung kommen (wobei die Glasschicht gegebenenfalls rutschhemmend ausgeführt sein kann).

Generell sei erwähnt, dass bei Verwendung der Außenverkleidung für den Außenbereich eine zweite Folie auf der Rückseite der Materialschicht, welche zweite Folie auch einen Kantenschutz der Materialschicht vermittelt, vorteilhaft ist, um einen dauerhaften Schutz der Außenverkleidung gegen Witterungseinflüsse, insbesondere gegen Feuchtigkeitseintritt, zu gewährleisten. Eine Alternative wäre auch eine Verleimung auf der Rückseite der Materialschicht, welche Verleimung sich auch auf den Kantenbereich der Materialschicht erstreckt; insbesondere kann hierfür wasserfester Weißleim verwendet werden. Bei Verwendung der Außenverkleidung im Innenbereich kann eine Lackschicht auf der Rückseite und im Kantenbereich der Materialschicht den gewünschten dauerhaften Schutz sicherstellen.

### Kurzbeschreibung der Figuren

Im Folgenden werden bevorzugte Ausführungsbeispiele der Erfindung unter Bezugnahme auf die Zeichnungen näher beschrieben. Diese Beschreibung soll den Erfindungsgedanken weder einengen noch abschließend wiedergeben. Es zeigen:
Fig. 1 eine schematische Darstellung eines Fensters, dessen Fensterstock durch ein erstes Ausführungsbeispiel einer erfindungsgemäßen Außenverkleidung vor Witterungseinflüssen geschützt ist;
Fig. 2 eine schematische Darstellung eines zweiten Ausführungsbeispiels einer erfindungsgemäßen Außenverkleidung;
Fig. 3 eine schematische Darstellung eines dritten Ausführungsbeispiels einer erfindungsgemäßen Außenverkleidung;
Fig. 4 eine schematische Darstellung eines Fensters, dessen Fensterstock durch das zweite Ausführungsbeispiel einer erfindungsgemäßen Außenverkleidung vor Witterungseinflüssen geschützt ist;
Fig. 5 schematische Darstellung einer Fassade, die durch das zweite Ausführungsbeispiel einer erfindungsgemäßen Außenverkleidung vor Witterungseinflüssen geschützt ist.

### Wege zur Ausführung der Erfindung

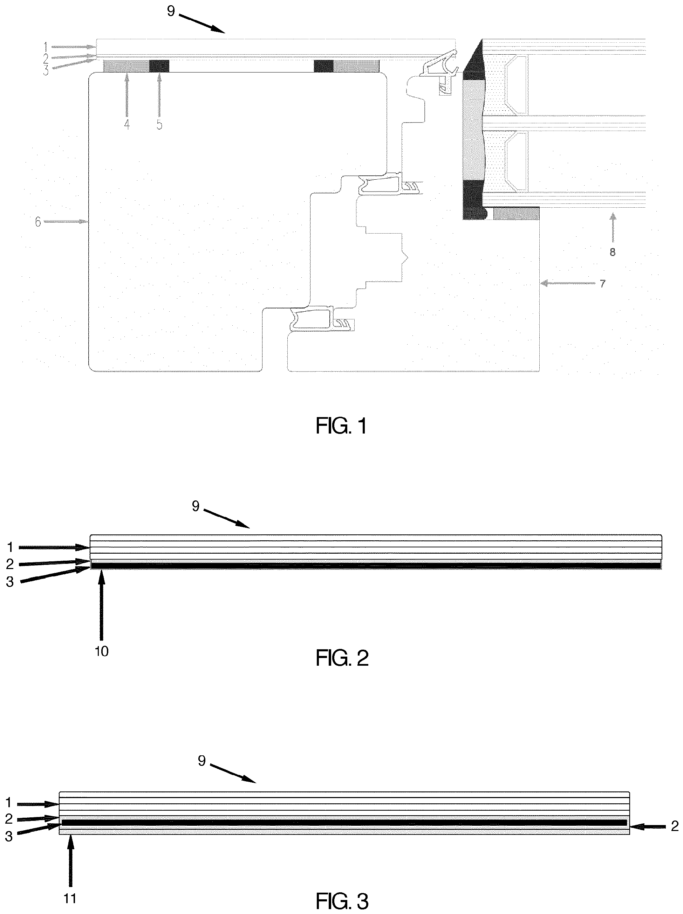

Fig. 1 zeigt eine schematische Schnittdarstellung eines Fensters, wobei zunächst ein Holzkantel 6 eines Stockrahmens, ein Teil eines Flügelrahmens 7, sowie ein Teil einer Fensterscheibe 8 zu sehen sind.

An einer Außenseite des Holzkantels 6 ist eine erfindungsgemäße Außenverkleidung 9 angebracht, um diese Außenseite des Holzkantels 6 vor Verwitterung zu schützen und dem Stockrahmen einen gewünschten optischen Eindruck zu verleihen. Die Außenverkleidung 9 umfasst gemäß diesem ersten Ausführungsbeispiel eine Glasschicht 1, ein Materialschicht 3 aus Furnier und eine Folie 2, welche Folie 2 hier als Schmelzfolie aus Ethylen-Vinylacetat-Copolymer (EVA) ausgebildet ist, umfasst, mittels welcher Schmelzfolie die Glasschicht 1 mit der Materialschicht 3 dauerhaft und witterungsbeständig verbunden ist.

Die Befestigung der Außenverkleidung 9 an dem Holzkantel 6 des Stockrahmens erfolgt über ein elastisches, doppelseitig klebendes Fixierband 4 mit einem komprimierbaren Kern und einem Fassadenkleber 5, wobei Fixierband 4 und Fassadenkleber 5 jeweils einerseits mit der Außenseite des Holzkantels 6 und andererseits mit einer Rückseite der Materialschicht 3 aus Furnier in Kontakt stehen. Es sind aber auch andere Möglichkeiten einer Klebeverbindung zwischen Außenverkleidung 9 und Holzkantel 6 denkbar. Darüber hinaus kann die Außenverkleidung, insbesondere ab dem ersten Obergeschoß, mittels punktueller form- oder kraftschlüssiger Verbindungsmittel, beispielsweise mittels sichtbarer Verschraubungen, an Türen, Fenstern, Fassaden oder ähnlichem befestigt werden. Dazu kann die Außenverkleidung (nach Schritt d) mit, vorzugsweise aufgeriebenen, Bohrungen versehen werden, durch welche Bohrungen Senkkopfschrauben oder Rundkopfschrauben hindurchgeführt werden können. Dabei können vorzugsweise Dichtringe benutzt werden, um die Außenverkleidung vor Feuchtigkeitseintritt zu schützen. Besonders bevorzugt sind die Bohrungen größer als der jeweilige Schraubendurchmesser ausgebildet, um etwaigen Wärmeausdehnungen und -schrumpfungen Rechnung zu tragen.

Die Außenverkleidung 9 wird wie folgt hergestellt: Zunächst werden Materialstücke aus Furnier (oder Holz oder anderen eine Restfeuchte aufweisenden Materialien) einer Vorbehandlung unterzogen, um diesen Restfeuchte zu entziehen bzw. den Wassergehalt der Materialstücke zu minimieren. Hierzu werden die Materialstücke in eine Furnier-Verleimpresse gelegt und bei einer Temperatur von 130 °C für etwa eine Stunde getrocknet. Anschließend werden die einzelnen Materialstücke (Furnierstücke) gefügt und zusammengenäht, um die Materialschicht 3 herzustellen. Auf eine mit einem Alkohol enthaltenden Reinigungsmittel gereinigte Innenseite der Glasschicht 1, welche Glasschicht 1 hier als Flachglasscheibe ausgeführt ist, wird daraufhin die Folie 2 aufgelegt; dabei ist die Folie 2 so zugeschnitten, dass sie passgenau auf die Glasschicht 1 aufgelegt werden kann - sprich, die Folie 2 ist in ihren Längen- und Breitenabmessungen auf die Innenseite der Glasschicht 1 abgestimmt. Bei der Folie 2 handelt es sich um eine UV-beständige und wasserbeständige Schmelzklebefolie. Schließlich wird die Materialschicht 3, die aus den Furnierstücken hergestellt wurde, geschliffen und mit einer Sichtfläche auf die Folie 2 gelegt, um einen (losen) Verbund aus Glasschicht 1, Folie 2 und Materialschicht 3 zu erhalten. Um während des Verpressens ein Herausquellen der Folie 2 aus dem Verbund zu verhindern, werden die Kanten mit einem Klebeband abgeklebt. Daraufhin wird der Verbund mit der Rückseite der Materialschicht 3 auf oder an einer 22 mm dicken Spanplatte, die wiederum auf einer 12 mm dicken MDF-Platte liegt, in einem Vakuumsack positioniert; dadurch wird eine zeitverzögerte Erwärmung der Materialschicht 3 und der Glasschicht 1 erreicht und ein Aufkochen der Folie 2 während der anschließenden Verfahrensschritte verhindert. Die Spanplatte und die MDF-Platte bilden zusammen eine Aufheizbremse aus, welche Aufheizbremse unterhalb des Vakuumsacks in einen Laminierofen eingelegt oder in den Vakuumsack eingelegt ist, sodass die Materialschicht 3 (durch den Vakuumsack getrennt) an der Aufheizbremse anliegt, oder (direkt) auf der Aufheizbremse aufliegt. Der Vakuumsack wird in den Laminierofen gelegt und bestimmungsgemäß in Betrieb genommen, sodass der Verbund einer homogenen Flächenpressung ausgesetzt wird; dadurch wird das Glas 1 mit der Folie 2 und dem Furnier der Materialschicht 3 gleichmäßig verpresst, wodurch eine Blasenbildung verhindert wird. Der Ofen wird nun in kleinen Schritten über einen Zeitraum von 40 Minuten auf eine Presstemperatur von 135 °C aufgeheizt. Diese Presstemperatur wird 50 Minuten lang gehalten und dann über einen Zeitraum von 30 Minuten langsam abgekühlt. Schließlich wird die Außenverkleidung 9 - die hier aus den nun dauerhaft miteinander verbundenen Schichten (Glasschicht 1, Folie 2 und Materialschicht 3) besteht, im Allgemeinen aber auch noch weitere Schichten aufweisen kann - aus dem Vakuumsack entnommen, die die Kanten bedeckenden Klebebänder werden abgezogen und die Kanten entsprechend gereinigt. Nun kann die Außenverkleidung 9 zur Verkleidung von Fenstern, Türen und Fassaden oder ähnlichem verwendet werden.

Durch das im vorstehenden Absatz in einer bevorzugten Ausführungsvariante beschriebene erfindungsgemäße Verfahren werden der erfindungsgemäße Außenverkleidung 9 strukturelle Merkmale verliehen, die dazu führen, dass die Schichten des Verbunds auch bei im Außenbereich vorherrschenden Witterungsbedingungen (insbesondere Feuchtigkeit, hohe und niedrige Temperaturen, Frost) jahrelang aneinander haften bleiben und die Außenverkleidung 9 formstabil bleibt. Ausschlaggebend hierfür ist eine optimale Verbindung zwischen der Folie 2 und den beiden anderen Schichten (Glasschicht 1 und Materialschicht 3); dies wird dadurch erreicht, dass der Verbund beim Verpressen einer hohen Presstemperatur von etwa 135 °C ausgesetzt wird. Nur so ist garantiert, dass der Schmelzkleber der Folie 2 tief genug in die Materialschicht 3 eindringen kann, um die Sichtfläche zu versiegeln. Ebenso relevant ist, dass bei diesen Temperaturen eine hochwertige und dauerhafte Verbindung zwischen Folie 2 und Glasschicht 1 erzielt wird. Würde man den Verbund derart hohen Temperaturen aussetzen, ohne die Materialschicht 3 entsprechend vorbehandelt zu haben, würde es im Laminier-Ofen zu Schwindungen im vernähten Stoßbereich der Materialstücke oder zu Rissen in der Materialschicht 3 kommen. Die erfindungsgemäße Außenverkleidung 9 ist aufgrund der Reduzierung der Restfeuchte auf unter 8 % frei von solchen Schwindungen oder Rissen. Ein weiterer Vorteil des Verfahrens besteht darin, dass ein Quellen der Furniere durch die Verschmelzung mit der Folie 2 nicht mehr möglich ist. Neben der der Wahl der Presstemperatur ist auch die Dauer der Haltephase, also jener Phase, in welcher die Presstemperatur gehalten wird, während der Verbund im Vakuumsack verpresst wird, ausschlaggebend für die Qualität der Außenverkleidung 9. Hier hat sich eine Haltephase von 50 Minuten als ideal herausgestellt. Bei Verkleidungselementen, die mit einer deutlich kürzeren Haltephase hergestellt werden (etwa 10-20 Minuten), ist es bereits nach einigen wenigen Tagen im Wasserbad möglich, die Glasschicht von der Materialschicht zu trennen, sodass solche Verkleidungen nicht für den Außeneinsatz geeignet sind.

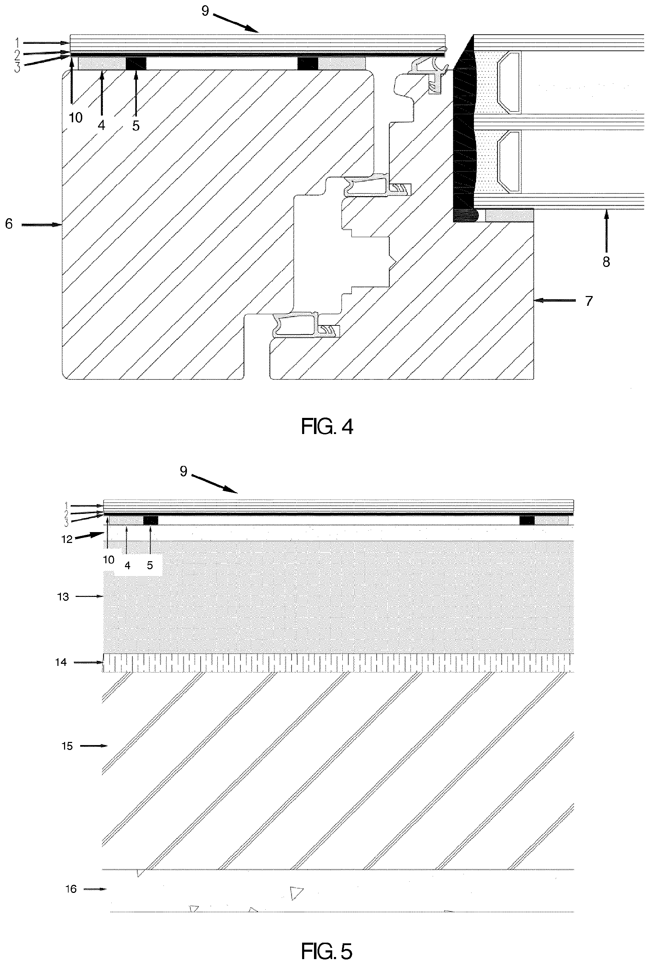

Fig. 2 zeigt ein zweites Ausführungsbeispiel der erfindungsgemäßen Außenverkleidung 9 in einer schematischen Schnittdarstellung. Abgesehen von einem angedeuteten mehrschichtigen Aufbau der Glasschicht 1 unterscheidet sich die Außenverkleidung 9 dieses Ausführungsbeispiels von jener des ersten Ausführungsbeispiels lediglich dadurch, dass die Außenverkleidung 9 des zweiten Ausführungsbeispiels eine Schutzschicht 10 umfasst. Die Schutzschicht 10 ist auf die von der Glasschicht 1 abgewandte Rückseite der Materialschicht 3 aufgebracht, um insbesondere die Rückseite der Materialschicht 3 vor der Aufnahme von Feuchtigkeit zu schützen, wenn die Außenverkleidung 9 bestimmungsgemäß zur Verkleidung von Türen, Fenstern (siehe Fig. 4), Fassaden (siehe Fig. 5) oder ähnlichem verwendet wird. Die Schutzschicht 10 ist hier durch eine Lackschicht ausgebildet. Die Materialschicht 3 kann in ihren Längen- und/oder Breitenabmessungen etwa 1 mm kleiner bemessen sein als die Glasschicht 1, um auch den Kantenbereich der Materialschicht 3 vor Eindringen von Feuchtigkeit zu schützen; somit kann die Schutzschicht 10 die Materialschicht 3 nicht nur rückseitig sondern auch seitlich umgeben, sodass die Materialschicht 3 (und die Folie 2) zwischen Glasschicht 1 und Schutzschicht 10 (wasserdicht) eingeschlossen ist (sind).

Fig. 3 zeigt ein drittes Ausführungsbeispiel der erfindungsgemäßen Außenverkleidung 9 in einer schematischen Schnittdarstellung. Abgesehen von dem angedeuteten mehrschichtigen Aufbau der Glasschicht 1 unterscheidet sich die Außenverkleidung 9 dieses Ausführungsbeispiels von jener des ersten Ausführungsbeispiels lediglich dadurch, dass die Außenverkleidung 9 des dritten Ausführungsbeispiels eine Träger- oder Gegenzugplatte 11 umfasst. Die Träger- oder Gegenzugplatte 11 ist unter Zwischenlage einer weiteren Folie 2 auf die von der Glasschicht 1 abgewandte Rückseite der Materialschicht 3 aufgebracht, wobei die Träger- oder Gegenzugplatte 11 hier als Melaminharzplatte ausgebildet ist und eine Stärke von etwa 0,8 mm, aufweist. Um die Außenverkleidung 9 dieses Ausführungsbeispiels herzustellen, wurde der Verbund aus Glasschicht 1, (erster) Folie 2 und Materialschicht 3, weiterer Folie 2 und Träger- oder Gegenzugplatte 11 unter Wärmezufuhr verpresst. Wie in Fig. 3 zu erkennen ist, ist die Materialschicht 3 von der ersten Folie 2 und der weiteren Folie 2 eingekapselt, was zu einer besonders hohen Witterungsbeständigkeit dieses Ausführungsbeispiels führt. Beide Folien 2 können dabei als EVA-Folien ausgebildet sein. Die Materialschicht 3 ist in ihren Längen- und Breitenabmessungen etwa 1 mm kleiner bemessen als die Glasschicht 1 und die Träger- oder Gegenzugplatte 11.

Fig. 4, ebenfalls eine schematische Schnittdarstellung, zeigt die Außenverkleidung 9 gemäß zweitem Ausführungsbeispiel, welche Außenverkleidung 9 bestimmungsgemäß an der Außenseite des Holzkantels 6 angebracht ist. Die Befestigung der Außenverkleidung 9 an dem Holzkantel 6 des Stockrahmens erfolgt (wie in dem in Fig. 1 illustrierten Fall) über ein elastisches, doppelseitig klebendes Fixierband 4 mit einem komprimierbaren Kern und einen Fassadenkleber 5, wobei Fixierband 4 und Fassadenkleber 5 jeweils einerseits mit der Außenseite des Holzkantels 6 und andererseits mit einer Rückseite der Schutzschicht 10 aus Lack (siehe auch Fig. 2) in Kontakt stehen. Es sind aber auch andere Möglichkeiten einer Klebeverbindung zwischen Außenverkleidung 9 und Holzkantel 6 denkbar. Darüber hinaus kann die Außenverkleidung, insbesondere ab dem ersten Obergeschoß, mittels punktueller form- oder kraftschlüssiger Verbindungsmittel, beispielsweise mittels sichtbarer Verschraubungen, an Türen, Fenstern, Fassaden oder ähnlichem befestigt werden. Dazu kann die Außenverkleidung (nach Schritt d) mit, vorzugsweise aufgeriebenen, Bohrungen versehen werden, durch welche Bohrungen Senkkopfschrauben oder Rundkopfschrauben hindurchgeführt werden können. Dabei können vorzugsweise Dichtringe benutzt werden, um die Außenverkleidung vor Feuchtigkeitseintritt zu schützen. Besonders bevorzugt sind die Bohrungen größer als der jeweilige Schraubendurchmesser ausgebildet, um etwaigen Wärmeausdehnungen und -schrumpfungen Rechnung zu tragen.

Fig. 5 zeigt die Außenverkleidung 9 gemäß zweitem Ausführungsbeispiel in einer schematischen Schnittdarstellung, wobei die Außenverkleidung 9 hier bestimmungsgemäß an einer Fassade bzw. als Teil einer Fassade verwendet wird. Die Befestigung der Außenverkleidung 9 an einer (verspachtelten) Außenfläche 12 der Fassade kann wiederum über ein elastisches, doppelseitig klebendes Fixierband 4 mit einem komprimierbaren Kern und einen Fassadenkleber 5 erfolgen, wobei Fixierband 4 und Fassadenkleber 5 jeweils einerseits mit der Außenfläche 12 und andererseits mit der Rückseite der Schutzschicht 10 aus Lack (siehe auch Fig. 2) in Kontakt stehen. Es sind aber auch andere Möglichkeiten der Befestigung der Außenverkleidung 9 an der Fassade bzw. der Außenfläche 12 denkbar. Beispielsweise kann die Außenverkleidung 9 mit einer Unterkonstruktion aus Holz oder Aluminium verbunden, vorzugsweise verschraubt, sein.

Wie aus Fig. 5 zu erkennen ist, weist die (erfindungsgemäße) Fassade folgenden Aufbau auf: Auf die Außenfläche 12 der Fassade (welche Außenfläche 12 nach Befestigung der Außenverkleidung 9 nicht mehr die von außen zugängliche (Außen-)Fläche der Fassade ausbildet) folgt ein Vollwärmeschutz 13, welcher Vollwärmeschutz 13 mittels einer Klebeschicht 14 auf einen Wandaufbau 15 (etwa ein Mauerwerk oder eine Holzriegelwand) des jeweiligen Gebäudes aufgebracht ist. An den Wandaufbau 15 kann ein Innenwandbelag 16 (beispielsweise eine Innenputzschicht oder eine Innenwandschalung) anschließen.

## Patentansprüche

1. Verfahren zur Herstellung einer Außenverkleidung (9) für Fenster, Türen oder Fassaden, wobei die Außenverkleidung (9) zumindest eine Glasschicht (1) und eine mit der Glasschicht (1) verbundene Materialschicht (3) aufweist, wobei die Materialschicht (3) insbesondere durch eine Holz- oder Furnierschicht und die Glasschicht (1) insbesondere durch eine Glasplatte, bevorzugt durch eine Flachglasscheibe, ausgebildet ist und wobei das Verfahren zumindest die folgenden Schritte umfasst:
a. Vorbehandeln der Materialschicht (3) oder mehrerer Materialstücke durch Entziehen von Restfeuchte;
b. gegebenenfalls Fügen mehrerer Materialstücke, um die Materialschicht (3) herzustellen;
c. Herstellen eines Verbunds durch Auflegen der Materialschicht (3) auf die Glasschicht (1) unter Zwischenlage einer Folie (2), insbesondere einer Kunststofffolie, vorzugsweise einer Schmelzfolie, beispielsweise einer EVA-Folie, wobei die Folie (2) vorzugsweise UV- und/oder witterungsbeständig ausgebildet ist;
d. Verpressen des Verbunds unter Wärmezufuhr;
e. Aufbringen einer Schutzschicht (10) auf eine von der Glasschicht (1) abgewandte Rückseite der Materialschicht (3), um insbesondere die Rückseite der Materialschicht (3) vor der Aufnahme von Feuchtigkeit zu schützen, wobei die Schutzschicht (10) die Materialschicht (3) nicht nur rückseitig sondern auch seitlich umgibt, sodass die Materialschicht (3) zwischen Glasschicht (1) und Schutzschicht (10) eingeschlossen ist; oder Aufbringen einer Träger- oder Gegenzugplatte (11) unter Zwischenlage einer weiteren Folie (2) auf die von der Glasschicht (1) abgewandte Rückseite der Materialschicht (3), sodass die Materialschicht (3) von der ersten Folie (2) und der weiteren Folie (2) eingekapselt ist.

2. Verfahren nach Anspruch 1, **dadurch gekennzeichnet, dass** die Materialschicht (3) oder die Materialstücke im Zuge des Vorbehandelns gemäß Schritt a. einer Trocknungstemperatur von mehr als 100°C, vorzugsweise zwischen 115°C und 145°C, besonders bevorzugt von 130°C, ausgesetzt wird bzw. werden, wobei die Trocknungstemperatur bevorzugt für zumindest 30 Minuten, vorzugsweise etwa 1 Stunde, gehalten wird.

3. Verfahren nach einem der Ansprüche 1 oder 2, **dadurch gekennzeichnet, dass** die Restfeuchte der Materialschicht (3) oder der Materialstücke im Zuge des Vorbehandelns gemäß Schritt a. auf weniger als 8%, vorzugsweise weniger als 5%, besonders bevorzugt weniger als 4%, reduziert wird.

4. Verfahren nach einem der Ansprüche 1 bis 3, **dadurch gekennzeichnet, dass** die Folie (2) in ihrer Größe passgenau auf die Glasschicht (1) abgestimmt ist und/oder dass die Materialschicht (3) in ihren Längen- und Breitenabmessungen kleiner, insbesondere jeweils etwa 1 mm kleiner, bemessen ist als die Glasschicht (1) und/oder als die Träger- oder Gegenzugplatte (11).

5. Verfahren nach Anspruch einem der Ansprüche 1 bis 4, **dadurch gekennzeichnet, dass** der Verbund während des Verpressens gemäß Schritt d. mit einer Aufheizbremse in Wirkverbindung steht, um die Erwärmung der Materialschicht (3) gegenüber der Erwärmung der Glasschicht (1) zu verzögern, wobei die Aufheizbremse vorzugsweise durch eine MDF-Platte und eine auf der MDF-Platte positionierte Spanplatte ausgebildet ist, wobei besonders bevorzugt eine Stärke der MDF-Platte 10-15 mm, insbesondere 12 mm, und/oder eine Stärke der Spanplatte 20-25 mm, insbesondere 22 mm, beträgt.

6. Verfahren nach Anspruch 5, **dadurch gekennzeichnet, dass** die Aufheizbremse derart in oder an dem Vakuumsack positioniert wird, dass die Materialschicht (3) des Verbunds während des Verpressens gemäß Schritt d auf oder an der Aufheizbremse, vorzugsweise auf oder an der Spanplatte der Aufheizbremse, zu liegen kommt.

7. Verfahren nach einem der Ansprüche 1 bis 6, **dadurch gekennzeichnet, dass** der Verbund im Zuge des Verpressens gemäß Schritt d. einer Presstemperatur von mehr als 100°C, vorzugsweise zwischen 110°C und 150°C, besonders bevorzugt von 135°C, ausgesetzt wird, wobei die Wärmezufuhr im Zuge des Verpressens gemäß Schritt d. vorzugsweise derart erfolgt, dass ein resultierendes Presstemperaturprofil eine Aufheizphase, in welcher Aufheizphase eine graduelle Temperaturerhöhung bis zum Erreichen der Presstemperatur erfolgt, eine Haltephase, in welcher Haltephase die Presstemperatur gehalten wird, und eine Abkühlphase aufweist, wobei die Aufheizphase vorzugsweise 30-50 Minuten, insbesondere 40 Minuten, die Haltephase vorzugsweise 40-60 Minuten, insbesondere 50 Minuten, und/oder die Abkühlphase vorzugsweise 20-40 Minuten, insbesondere 30 Minuten, andauert.

8. Verfahren nach einem der Ansprüche 1 bis 7, **dadurch gekennzeichnet, dass** in Schritt c. entweder zwischen Materialschicht (3) und Folie (2), oder zwischen Folie (2) und Glasschicht (1) eine PV-Funktionsschicht angeordnet wird, welche PV-Funktionsschicht zumindest eine Solarzellen-Schicht umfasst.

9. Außenverkleidung (9) für Fenster, Türen oder Fassaden, wobei die Außenverkleidung (9) zumindest eine Glasschicht (1), insbesondere eine Glasplatte oder eine Flachglasscheibe, eine mit der Glasschicht (1) verbundene Materialschicht (3), insbesondere eine Holz- oder Furnierschicht, sowie eine zwischen Glasschicht (1) und Materialschicht (3) angeordnete Folie (2), vorzugsweise eine Schmelzfolie, aufweist, wobei
• auf eine von der Glasschicht (1) abgewandte Rückseite der Materialschicht (3) eine Schutzschicht (10) aufgebracht ist, um insbesondere die Rückseite der Materialschicht (3) vor der Aufnahme von Feuchtigkeit zu schützen, wobei die Schutzschicht (10) die Materialschicht (3) nicht nur rückseitig sondern auch seitlich umgibt, sodass die Materialschicht (3) zwischen Glasschicht (1) und Schutzschicht (10) eingeschlossen ist; oder wobei
• eine Träger- oder Gegenzugplatte (11) derart unter Zwischenlage einer weiteren Folie (2) auf die von der Glasschicht (1) abgewandte Rückseite der Materialschicht (3) aufgebracht ist, dass die Materialschicht (3) von der ersten Folie (2) und der weiteren Folie (2) eingekapselt ist.

10. Außenverkleidung (9) nach Anspruch 9, wobei die Herstellung der Außenverkleidung ein Vorbehandeln der Materialschicht (3) durch Entziehen von Restfeuchte, ein Herstellen eines Verbunds durch Auflegen der Materialschicht (3) auf die Glasschicht (1) unter Zwischenlage der Folie (2) und ein Verpressen des Verbunds unter Wärmezufuhr umfasst.

11. Außenverkleidung (9) nach einem der Ansprüche 9 oder 10, wobei die Schutzschicht (10) durch eine Lackschicht, eine Epoxidharzschicht, eine Schicht aus wasserfestem Leim, insbesondere Weißleim, und/oder durch eine wasserdichte Folie ausgebildet ist.

12. Außenverkleidung (9) nach einem der Ansprüche 9 bis 11, wobei die weitere Folie (2) durch eine weitere Schmelzklebefolie ausgebildet ist.

13. Außenverkleidung (9) nach einem der Ansprüche 9 bis 12, wobei die Folie (2) in ihrer Größe passgenau auf die Glasschicht (1) abgestimmt ist und/oder wobei die Materialschicht (3) in ihren Längen- und Breitenabmessungen kleiner, insbesondere jeweils etwa 1 mm kleiner, bemessen ist als die Glasschicht (1) und/oder als die Träger- oder Gegenzugplatte (11).

14. Fenster, Tür oder Fassade umfassend die Außenverkleidung (9) nach einem der Ansprüche 9 bis 13.
